# EUROPEAN PATENT APPLICATION

(11) **EP 4 470 705 A1**
(43) Date of publication of application: **04.12.2024**
(21) Application number: 24178122.8
(22) Date of filing: 26.05.2024
(51) Int. Cl.: B23K 11/11, B23K 11/25, B23K 11/34

(54) **SOLID STATE WELDING APPARATUS AND SOLID STATE WELDING METHOD**

(30) Priority: 29.05.2023 JP 2023087684
(71) Applicant: OSAKA UNIVERSITY, Suita-shi Osaka 565-0871 (JP); DAIHEN Corporation, Yodogawa-ku Osaka-shi, Osaka 532-8512 (JP)
(72) Inventor: FUJII, Hidetoshi, Osaka, 565-0871 (JP); MORISADA, Yoshiaki, Osaka, 565-0871 (JP); AIBARA, Takumi, Osaka, 565-0871 (JP); MIYAUCHI, Takaaki, Osaka, 532-8512 (JP)
(74) Representative: Zacco GmbH

(57) **Abstract**

A solid state welding apparatus (1) comprises a pair of compression bars (11) and (12) that presses a first metal workpiece (W10) and a second metal workpiece (W20) on sides opposite in a direction of a thickness of the workpieces, a pair of electrodes (21) and (22) disposed around the pair of compression bars (11) and (12), respectively, and a controller (30). The controller (30) passes a first current (X1) through the pair of electrodes (21) and (22) while controlling the pair of compression bars (11) and (12) to cause a first load (F1) to act on each of first and second workpieces (W10) and (W20) to bring the workpieces into contact with each other, and subsequently passes a second current (X2) larger than the first current (X1) through the pair of electrodes (21) and (22) while controlling the pair of compression bars (11) and (12) to cause a second load (F2) to act on each of first and second workpieces (W10) and (W20).

## Description

### CROSS REFERENCE TO RELATED APPLICATIONS

This nonprovisional application is based on Japanese Patent Application No. 2023-087684 filed on May 29, 2023 with the Japan Patent Office, the entire contents of which are hereby incorporated by reference.

### BACKGROUND OF THE INVENTION

### Field of the Invention

The present disclosure relates to a solid state welding apparatus and a solid state welding method using the solid state welding apparatus.

### Description of the Background Art

Japanese Patent Application Laying-Open No. 2020-011253 discloses resistance spot welding to join a plurality of metal plates stacked in the direction of their thickness. Resistance spot welding is a welding method in which while metal plates are sandwiched by electrodes and pressure is applied to the metal plates, a large current is passed to melt the metal. Japanese Patent Application Laying-Open No. 2020-011253 discloses a technology including a preliminary conduction step to alloy a plating metal of a metal plating layer and a main conduction step to join a plurality of metal plates.

### SUMMARY OF INVENTION

Japanese Patent Application Laying-Open No. 2020-011253 is a technology relating to resistance spot welding and does not relate to solid state welding. In the present specification, a joining method which does not melt a metal and instead joins the metal in a solid state in a low temperature range to prevent the metal from being reduced in strength or the like as the metal is molten by a large current, will be referred to as "solid state welding". Japanese Patent Application Laying-Open No. 2020-011253 does not assume joining in a low temperature range such as solid state welding.

Solid state welding is joining in a low temperature range, and as a workpiece of metal is higher in hardness, a load applied to the workpiece would increase. This results in an apparatus increased in size in order to increase durability.

It is an object of the present disclosure to provide a solid state welding apparatus allowing a reduced load to be applied to a workpiece, and a solid state welding method using the solid state welding apparatus.

A solid state welding apparatus according to one aspect of the present disclosure comprises a pair of compression bars that presses a first metal workpiece and a second metal workpiece on sides opposite in a direction of a thickness of the workpieces, a pair of electrodes disposed around the pair of compression bars, respectively, and a controller. The controller passes a first current through the pair of electrodes while controlling the pair of compression bars to cause a first load to act on each of the first and second workpieces to bring the workpieces into contact with each other, and subsequently passes a second current larger than the first current through the pair of electrodes while controlling the pair of compression bars to cause a second load to act on each of the first and second workpieces.

A solid state welding method according to one aspect of the present disclosure relates to a solid state welding method using a solid state welding apparatus comprising a pair of compression bars that presses a first metal workpiece and a second metal workpiece on sides opposite in a direction of a thickness of the workpieces, a pair of electrodes disposed around the pair of compression bars, respectively, and a controller. The controller performs the steps of: passing a first current through the pair of electrodes while controlling the pair of compression bars to cause a first load to act on each of the first and second workpieces to bring the workpieces into contact with each other; and subsequently passing a second current larger than the first current through the pair of electrodes while controlling the pair of compression bars to cause a second load to act on each of the first and second workpieces.

The foregoing and other objects, features, aspects and advantages of the present invention will become more apparent from the following detailed description of the present invention when taken in conjunction with the accompanying drawings.

### BRIEF DESCRIPTION OF THE DRAWINGS

Fig. 1 is a diagram schematically showing a step of passing a first current in a solid state welding apparatus according to an embodiment of the present disclosure.
Fig. 2 is a diagram schematically showing a step of passing a second current in the solid state welding apparatus according to the embodiment of the present disclosure.
Fig. 3 is a diagram showing how a current changes with respect to time and how a load changes with respect to time.
Fig. 4 is a diagram showing how a current changes with respect to time and how a load changes with respect to time.
Fig. 5 is a flowchart showing content of control executed by a controller.
Fig. 6 is a diagram showing how a current changes with respect to time and how a load changes with respect to time.

### DESCRIPTION OF THE PREFERRED EMBODIMENTS

Hereinafter, embodiments of the present disclosure will be described in detail with reference to the accompanying drawings. In the figures, identical or equivalent components are identically denoted and will not be described repeatedly.

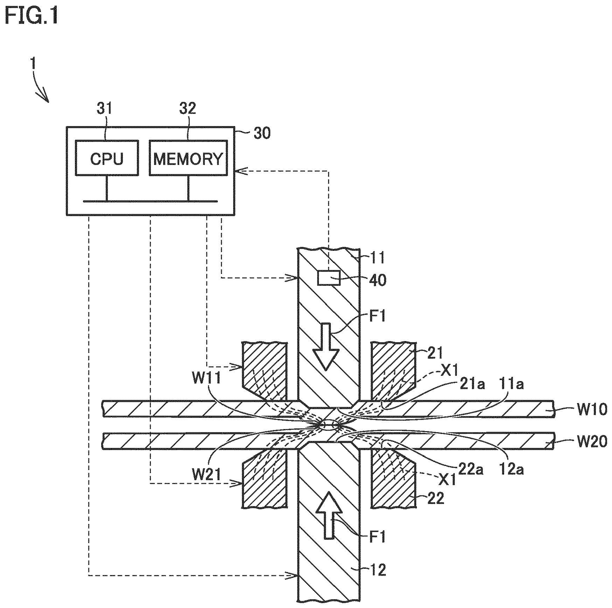

A solid state welding apparatus 1 according to an embodiment of the present disclosure initially passes a first current X1 and subsequently passes a second current X2. Fig. 1 is a diagram schematically showing a step of passing first current X1 in solid state welding apparatus 1 according to the embodiment of the present disclosure. Solid state welding apparatus 1 passes a current through a plurality of workpieces W10 and W20, one overlying the other, to provide a softened region at an interface of the plurality of workpieces W10 and W20, and plastically deforms the softened region to join the plurality of workpieces W10 and W20 in a solid state without melting the workpieces.

The plurality of workpieces W10 and W20 include a first workpiece W10 and a second workpiece W20. Workpieces W10 and W20 are each made of a metal such as iron or aluminum. Workpieces W10 and W20 are each formed for example in a flat plate.

As shown in Fig. 1, solid state welding apparatus 1 comprises a pair of compression bars 11 and 12, a pair of electrodes 21 and 22, a controller 30, and a sensor 40.

The pair of compression bars 11 and 12 can apply pressure to first and second workpieces W10 and W20 on sides opposite in a direction of a thickness of the plate-shaped workpieces when they are stacked together. The pair of compression bars 11 and 12 is driven by a driving source (e.g., a servo press) not shown. The pair of compression bars 11 and 12 includes a first compression bar 11 and a second compression bar 12.

First compression bar 11 has a shape elongated in one direction (a direction of an arrow F1 in Fig. 1). First compression bar 11 is capable of pressing first workpiece W10 so that first workpiece W10 is plastically deformed. Specifically, first compression bar 11 is capable of pressing first workpiece W10 so that protrusion W11 is formed on first workpiece W10. First compression bar 11 is made of tungsten carbide, for example. In the present embodiment, first compression bar 11 is formed cylindrically. First compression bar 11 has a pressing surface 11a to press first workpiece W10. Pressing surface 11a is an end face of first compression bar 11. Pressing surface 11a is formed in a circle.

Second compression bar 12 has the same configuration as first compression bar 11. Second compression bar 12 is disposed such that second compression bar 12 has a central axis located on an extension of the central axis of first compression bar 11 and second compression bar 12 has a pressing surface 12a opposite to pressing surface 11a of first compression bar 11. First compression bar 11 and second compression bar 12 may have a shape other than a cylindrical shape.

Sensor 40 is provided for example at first compression bar 11. In the present embodiment, a load cell is used as sensor 40. Sensor 40 may not be installed at first compression bar 11.

The pair of electrodes 21 and 22 can pass a current through first and second workpieces W10 and W20 while the pair of electrodes 21 and 22 are in contact with first and second workpieces W10 and W20. The pair of electrodes 21 and 22 are supplied with a voltage and a current from a power supply unit (not shown). The pair of electrodes 21 and 22 includes a first electrode 21 and a second electrode 22.

First electrode 21 can come into contact with first workpiece W10 at a portion around a portion to which first compression bar 11 applies pressure. In the present embodiment, first electrode 21 is formed in a cylinder surrounding first compression bar 11. A gap is provided between an inner circumferential surface of first electrode 21 and an outer circumferential surface of first compression bar 11. First electrode 21 is made of copper for example. First electrode 21 has a contact surface 21a that comes into contact with first workpiece W10. Contact surface 21a is formed annularly. Contact surface 21a may not be formed annularly.

Second electrode 22 has the same configuration as first electrode 21. Second electrode 22 can come into contact with second workpiece W20 at a portion around a portion to which second compression bar 12 applies pressure. Second electrode 22 is disposed such that second electrode 22 has a central axis located on an extension of the central axis of first electrode 21 and second electrode 22 has a contact surface 22a opposite to contact surface 21a of first electrode 21.

Controller 30 includes a CPU 31 (Central Processing Unit), a memory 32 (ROM (Read Only Memory) and a RAM (Random Access Memory)), an input/output device (not shown) to input/output a variety of types of signals, etc. CPU 31 functions as processing circuitry that develops a program stored in the ROM into the RAM or the like and executes the program. The program stored in the ROM is a program describing a processing procedure for controller 30. Controller 30 controls each device in accordance with these programs. This control is not limited to processing by software, and may be processed by dedicated hardware (or electronic circuitry).

Controller 30 controls the pair of compression bars 11 and 12 and the pair of electrodes 21 and 22. Specifically, controller 30 controls a load acting on first and second workpieces W10 and W20 from the pair of compression bars 11 and 12, a load acting on first and second workpieces W10 and W20 from the pair of electrodes 21 and 22, a voltage applied to the pair of electrodes 21 and 22, and an amount by which the pair of compression bars 11 and 12 and the pair of electrodes 21 and 22 are pressed. Controller 30 controls a current supplied to the pair of electrodes 21 and 22 by controlling a voltage applied to the pair of electrodes 21 and 22.

Controller 30 performs an operation of causing a first load F1 (see Fig. 1) to act on first and second workpieces W10 and W20 from the pair of compression bars 11 and 12 so that protrusions W11 and W21 which contact each other are formed on first and second workpieces W10 and W20, respectively. When controller 30 performs this operation, the controller also performs an operation of causing an adjustment load smaller than first load F1 (for example, a load of 1 kN or less) to act on first and second workpieces W10 and W20 from the pair of electrodes 21 and 22.

Subsequently, controller 30 performs an operation of passing a current through first and second workpieces W10 and W20. Specifically, controller 30 performs an operation of passing a current through first and second workpieces W10 and W20 while causing first load F1 to act on first and second workpieces W10 and W20 from the pair of compression bars 11 and 12, and also bringing contact surface 21a of first electrode 21 into contact with first workpiece W10 at a portion around a portion to which first compression bar 11 applies pressure and bringing contact surface 22a of second electrode 22 into contact with second workpiece W20 at a portion around a portion to which second compression bar 12 applies pressure. Controller 30 controls such that, as indicated by a broken line, first current X1 passes between the pair of electrodes 21 and 22 through protrusions W11 and W21.

Protrusions W11 and W21 are softened as first current X1 passes. In the present embodiment, controller 30 causes first load F1 to act on first and second workpieces W10 and W20 while passing first current X1 to soften protrusions W11 and W21. Thus, in the present embodiment, a load applied when forming protrusions W11 and W21 can be reduced as compared with that applied when forming the protrusions without passing first current X1.

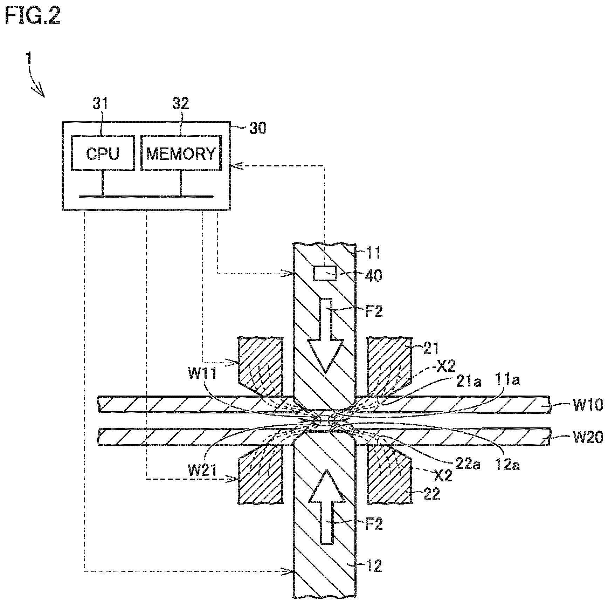

Fig. 2 is a diagram schematically showing a step of passing second current X2 in solid state welding apparatus 1 according to an embodiment of the present disclosure. Controller 30 performs an operation of causing a second load F2 that is larger than first load F1 to act on each of protrusions W11 and W21 formed on first and second workpieces W10 and W20. When controller 30 performs this operation, the controller also performs an operation of causing an adjustment load smaller than second load F2 (for example, a load of 1 kN or less) to act on first and second workpieces W10 and W20 from the pair of electrodes 21 and 22.

Subsequently, controller 30 performs an operation of passing a current through first and second workpieces W10 and W20. Specifically, controller 30 performs an operation of passing a current through first and second workpieces W10 and W20 while causing second load F2 to act on first and second workpieces W10 and W20 from the pair of compression bars 11 and 12, and also bringing contact surface 21a of first electrode 21 into contact with first workpiece W10 at a portion around a portion to which first compression bar 11 applies pressure and bringing contact surface 22a of second electrode 22 into contact with second workpiece W20 at a portion around a portion to which second compression bar 12 applies pressure. Controller 30 controls such that, as indicated by a broken line, second current X2 passes between the pair of electrodes 21 and 22 through protrusions W11 and W21.

Second current X2 is larger than first current X1. As second current X2 passes, protrusions W11 and W21 become softer than the state shown in Fig. 1. In the present embodiment, controller 30 causes second load F2 to act on first and second workpieces W10 and W20 while passing second current X2 to soften protrusions W11 and W21. Thus, in the present embodiment, first and second workpieces W10 and W20 can be joined together at the locations of protrusions W11 and W21.

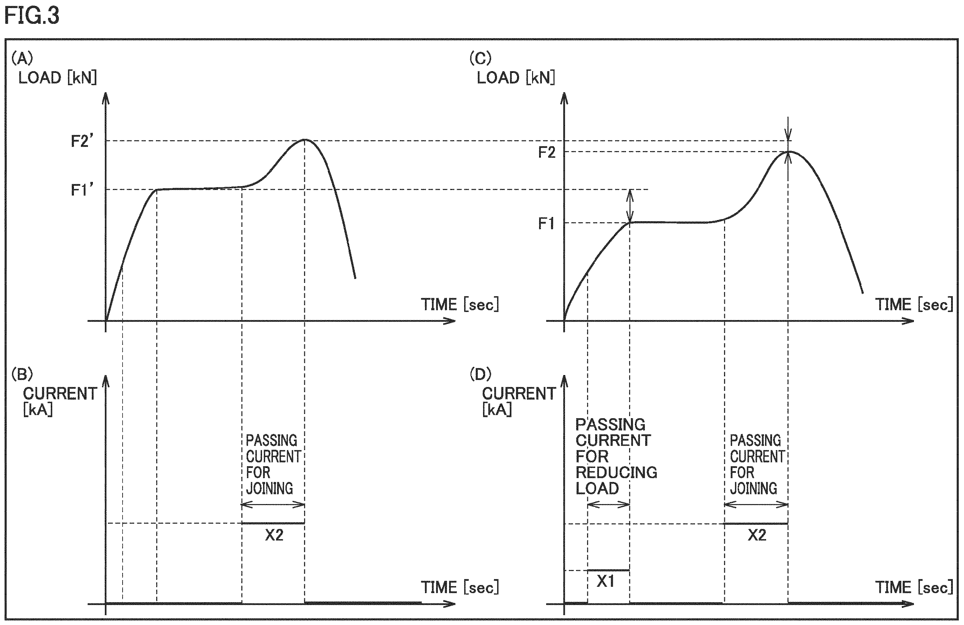

Fig. 3 is a diagram showing how a current changes with respect to time and how a load changes with respect to time. Fig. 3(A) is a diagram showing how the load changes with respect to time when first current X1 is not passed when the protrusions are formed. Fig. 3(B) is a diagram showing how the current changes with respect to time when first current X1 is not passed when the protrusions are formed. Fig. 3(C) is a diagram showing how the load changes with respect to time when first current X1 is passed when the protrusions are formed. Fig. 3(D) is a diagram showing how the current changes with respect to time when first current X1 is passed when the protrusions are formed.

As shown in Figs. 3(A) and 3(B), when first current X1 is not passed when the protrusions are formed, a load of F1' [kN] is required as a load applied when the protrusions are formed. In contrast, as shown in Figs. 3(C) and 3(D), when first current X1 is passed when the protrusions are formed, the protrusions can be formed while a load F1 [kN] smaller than F1' [kN] is applied as a load applied when the protrusions are formed. Thus, solid state welding apparatus 1 of the present embodiment can reduce a load applied when the protrusions are formed as first current X1 is passed when the protrusions are formed.

As shown in Figs. 3(A) and 3(B), when first current X1 is not passed when the protrusions are formed, a load of F2' [kN] is required as a load applied in joining. In contrast, as shown in Figs. 3(C) and 3(D), when first current X1 is passed when the protrusions are formed, first and second workpieces W10 and W20 can be joined together while a load of F2 [kN] smaller than F2' [kN] is applied as a load applied in joining. Thus, solid state welding apparatus 1 of the present embodiment can reduce a load applied in joining as first current X1 is passed when the protrusions are formed.

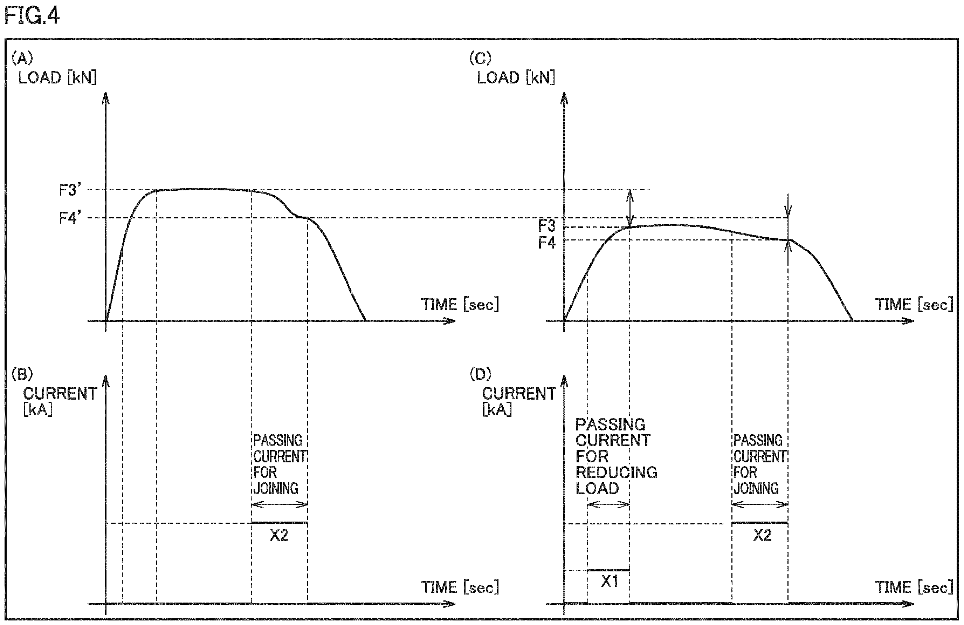

Fig. 4 is a diagram showing how a current changes with respect to time and how a load changes with respect to time. In contrast to Fig. 3, Fig. 4 represents a case in which a load applied in joining is smaller than a load applied when the protrusions are formed. Fig. 4(A) is a diagram showing how the load changes with respect to time when first current X1 is not passed when the protrusions are formed. Fig. 4(B) is a diagram showing how the current changes with respect to time when first current X1 is not passed when the protrusions are formed. Fig. 4(C) is a diagram showing how the load changes with respect to time when first current X1 is passed when the protrusions are formed. Fig. 4(D) is a diagram showing how the current changes with respect to time when first current X1 is passed when the protrusions are formed.

As shown in Figs. 4(A) and 4(B), when first current X1 is not passed when the protrusions are formed, a load of F3' [kN] is required as a load applied when the protrusions are formed. In contrast, as shown in Figs. 4(C) and 4(D), when first current X1 is passed when the protrusions are formed, the protrusions can be formed while a load F3 [kN] smaller than F3' [kN] is applied as a load applied when the protrusions are formed. Thus, solid state welding apparatus 1 of the present embodiment can reduce a load applied when the protrusions are formed as first current X1 is passed when the protrusions are formed.

As shown in Figs. 4(A) and 4(B), when first current X1 is not passed when the protrusions are formed, a load of F4' [kN] is required as a load applied in joining. In contrast, as shown in Figs. 4(C) and 4(D), when first current X1 is passed when the protrusions are formed, first and second workpieces W10 and W20 can be joined together while a load of F4 [kN] smaller than F4' [kN] is applied as a load applied in joining. Thus, solid state welding apparatus 1 of the present embodiment can reduce a load applied in joining as first current X1 is passed when the protrusions are formed.

As shown in Figs. 3 and 4, by passing first current X1 when the protrusions are formed, solid state welding apparatus 1 of the present embodiment allows joining to be done while a reduced load is applied when a load applied in joining is smaller than a load applied when the protrusions are formed as well as when the load applied in joining is larger than the load applied when the protrusions are formed. Note that as shown in Figs. 3 and 4, solid state welding apparatus 1 of the present embodiment temporarily stops a current from passing between passing first current X1 for reducing a load and passing second current X2 for joining. This is done to prevent protrusions W11 and W21 from melting and changing their nature as a current is continuously passed.

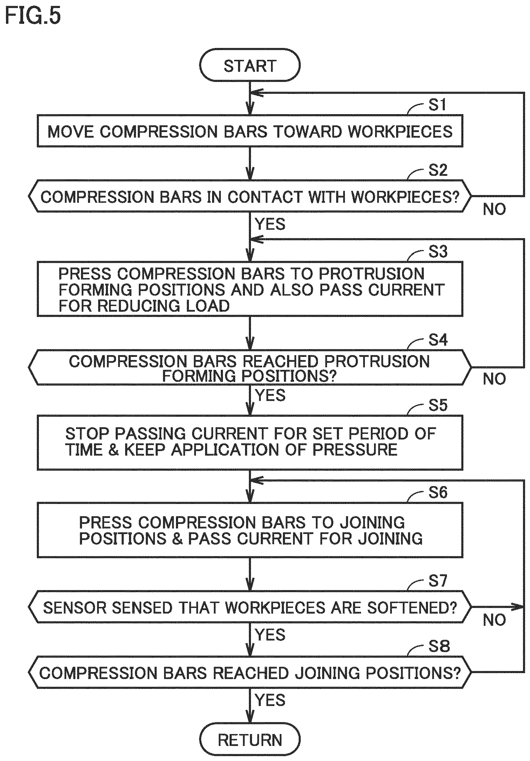

Subsequently, a process performed by controller 30 will be described. Fig. 5 is a flowchart of content of control performed by controller 30. The process of the flowchart of Fig. 5 is repeatedly invoked and performed as a subroutine from a main routine in the control by controller 30. Controller 30 initially in step (hereinafter simply referred to as "S") 1 moves the pair of compression bars 11 and 12 toward first and second workpieces W10 and W20, respectively.

Subsequently, controller 30 determines whether the pair of compression bars 11 and 12 are in contact with first and second workpieces W10 and W20, respectively (S2). For example, controller 30 acquires a detection value of sensor 40, and determines that the pair of compression bars 11 and 12 are in contact with first and second workpieces W10 and W20 based on the detection value having increased. Controller 30 stores the contact position as a reference position in S2. When controller 30 determines that the pair of compression bars 11 and 12 are not in contact with first and second workpieces W10 and W20, respectively (NO in S2), the controller returns to S1. When controller 30 determines that the pair of compression bars 1 1 and 12 are in contact with first and second workpieces W10 and W20, respectively (YES in S2), the controller proceeds to S3.

In step S3, controller 30 performs a process to press the pair of compression bars 11 and 12 to a protrusion forming position and also pass first current X1 for reducing a load. Subsequently, controller 30 determines whether the pair of compression bars 11 and 12 has reached protrusion forming positions, respectively (S4). For example, controller 30 may determine whether the pair of compression bars 11 and 12 has moved from the contact position stored in S2 to the protrusion forming positions for which protrusions W11 and W21 are formed on first and second workpieces W10 and W20. Controller 30 stores the protrusion forming position as a reference position in step S4. When controller 30 determines that the pair of compression bars 11 and 12 has not reached the protrusion forming positions (NO in S4), the controller returns to S3.

When controller 30 determines that the pair of compression bars 11 and 12 has reached the protrusion forming positions, respectively (YES in S4), the controller proceeds to S5. When the pair of compression bars 11 and 12 has reached the protrusion forming positions, respectively, first load F1 acts on first and second workpieces W10 and W20. In S5 controller 30 stops passing the current for a predetermined period of time and keeps the pair of compression bars 11 and 12 to apply pressure.

Subsequently, controller 30 performs a process to press the pair of compression bars 11 and 12 to joining positions, respectively, and pass second current X2 for joining (S6). Subsequently, controller 30 determines based on a detection value of sensor 40 whether first and second workpieces W10 and W20 have protrusions W11 and W21 softened (S7). Controller 30 determines whether protrusions W11 and W21 are softened for example based on whether the detection value of sensor 40 is equal to or smaller than a predetermined threshold value. When controller 30 determines that protrusions W11 and W21 are not softened (i.e., when the detection value of sensor 40 is larger than the threshold value), the controller returns to S6. When controller 30 determines that protrusions W11 and W21 are softened (i.e., when the detection value of sensor 40 is equal to or smaller than the threshold value), the controller 30 proceeds to S8.

In S8, controller 30 determines whether the pair of compression bars 11 and 12 has reached the joining positions, respectively. For example, controller 30 may determine whether the pair of compression bars 11 and 12 has moved from the protrusion forming positions stored in S4 to the joining positions for which first and second workpieces W10 and W20 are joined together.

When controller 30 determines that the pair of compression bars 11 and 12 has not reached the joining positions (NO in S8), the controller returns to S6. When controller 30 determines that the pair of compression bars 11 and 12 has reached the joining positions, respectively (YES in S8), controller 30 returns the process from the subroutine to the main routine. When the pair of compression bars 11 and 12 has reached the joining positions, respectively, second load F2 acts on first and second workpieces W10 and W20.

As shown in Fig. 5, solid state welding apparatus 1 of the present embodiment can pass first current X1 in S3 in forming the protrusions to allow a reduced load to be applied in forming the protrusions, and, as first current X1 softens a joint portion of first and second workpieces W10 and W20, joining can be done with a reduced load. Thus, by adding the step of passing a current and softening, solid state welding apparatus 1 according to the present embodiment can enhance the pair of compression bars 11 and 12 in durability and avoid a driving source (a servo press or the like) from having an increased size.

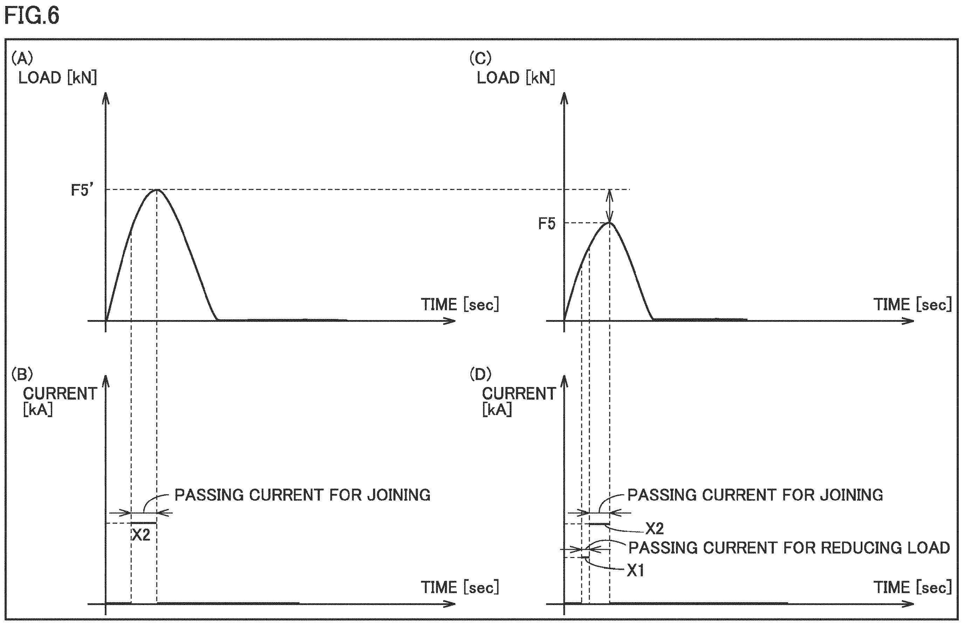

Hereinafter will be described a case in which passing a current is not stopped between when the protrusions are formed and when joining is done. Fig. 6 is a diagram showing how a current changes with respect to time and how a load changes with respect to time. Fig. 6(A) is a diagram showing how the load changes with respect to time when first current X1 is not passed when the protrusions are formed. Fig. 6(B) is a diagram showing how the current changes with respect to time when first current X1 is not passed when the protrusions are formed. Fig. 6(C) is a diagram showing how the load changes with respect to time when first current X1 is passed when the protrusions are formed. Fig. 6(D) is a diagram showing how the current changes with respect to time when first current X1 is passed when the protrusions are formed.

Fig. 6 shows a graph in which the load continues to increase from when the protrusions are formed to when joining is done. As shown in Figs. 6(A) and 6(B), when first current X1 is not passed when the protrusions are formed, a load of F5' [kN] is required as a load applied in joining. In contrast, as shown in Figs. 6(C) and 6(D), when first current X1 is passed when the protrusions are formed, first and second workpieces W10 and W20 can be joined together by a load of F5 [kN] smaller than F5' [kN] as a load applied in joining. As described above, by passing first current X1 when the protrusions are formed, even when passing a current is not stopped between when the protrusions are formed and when joining is done, solid state welding apparatus 1 according to the present embodiment allows joining to be done with a reduced load, and hence an entire process to be done in a reduced period of time.

While in the above embodiment a detection value of a load cell is used as sensor 40, a sensor different from the load cell may be used to sense that workpieces W10 and W20 are softened. As such a sensor, a camera capable of imaging a contact portion of protrusions W11 and W21 may be used. In this case, controller 30 determines whether workpieces W10 and W20 have been softened based on the luminance of the contact portion. As such a sensor, a contact-type or non-contact-type thermometer may be used. Controller 30 may determine whether workpieces W10 and W20 have been softened based on the temperature of the contact portion. Alternatively, controller 30 may determine whether workpieces W10 and W20 have been softened based on a result of a calculation of the heat quantity of each of workpieces W10 and W20 acquired in advance, and a timer of a power supply.

### <Summary>

(1) Solid state welding apparatus 1 of the present disclosure comprises the pair of compression bars 11 and 12 that presses first metal workpiece W10 and second metal workpiece W20 on sides opposite in a direction of a thickness of the workpieces, the pair of electrodes 21 and 22 disposed around the pair of compression bars 11 and 12, respectively, and controller 30. Controller 30 passes first current X1 through the pair of electrodes 21 and 22 while controlling the pair of compression bars 11 and 12 to cause first load F1 to act on each of first and second workpieces W10 and W20 to bring the workpieces into contact with each other, and subsequently passes second current X2 larger than first current X1 through the pair of electrodes 21 and 22 while controlling the pair of compression bars 11 and 12 to cause second load F2 to act on each of first and second workpieces W10 and W20.
(2) In solid state welding apparatus 1 of item (1), as shown in Fig. 3, controller 30 passes first current X1 through the pair of electrodes 21 and 22 for a first period of time and thereafter temporarily stops passing the current, and subsequently passes second current X2 through the pair of electrodes 21 and 22 for a second period of time.
(3) In solid state welding apparatus 1 of item (1), as shown in Fig. 6, controller 30 passes first current X1 through the pair of electrodes 21 and 22 for a first period of time, immediately followed by passing second current X2 through the pair of electrodes 21 and 22 for a second period of time.
(4) Solid state welding apparatus 1 of any one of items (1) to (3) further comprises sensor 40 capable of sensing a load acting on first and second workpieces W10 and W20 from the pair of compression bars 11 and 12. Controller 30 stops passing first current X1 through the pair of electrodes 21 and 22 in response to a value detected by sensor 40 being a first threshold value, and stops passing second current X2 through the pair of electrodes 21 and 22 in response to a value detected by sensor 40 being a second threshold value.
(5) A solid state welding method of the present disclosure relates to a solid state welding method using solid state welding apparatus 1 comprising the pair of compression bars 11 and 12 that presses first metal workpiece W10 and second metal workpiece W20 on sides opposite in a direction of a thickness of the workpieces, the pair of electrodes 21 and 22 disposed around the pair of compression bars 11 and 12, respectively, and controller 30. Controller 30 performs the steps of: passing first current X1 through the pair of electrodes 21 and 22 while controlling the pair of compression bars 11 and 12 to cause first load F1 to act on each of first and second workpieces W10 and W20 to bring the workpieces into contact with each other; and subsequently passing second current X2 larger than first current X1 through the pair of electrodes 21 and 22 while controlling the pair of compression bars 11 and 12 to cause second load F2 to act on each of first and second workpieces W10 and W20.

The presently disclosed solid state welding apparatus 1 and solid state welding method using solid state welding apparatus 1 allowing first current X1 to be passed through the pair of electrodes 21 and 22 while causing first load F1 to act on each of first and second workpieces W10 and W20 to bring the workpieces into contact with each other, allow protrusions to be formed with a reduced load, and joining to be done with a reduced load. Thus, solid state welding apparatus 1 and the solid state welding method according to the present embodiment can enhance the pair of compression bars 11 and 12 in durability and avoid a driving source (a servo press or the like) from having an increased size.

It should be understood that the embodiments disclosed herein have been described for the purpose of illustration only and in a non-restrictive manner in any respect. The scope of the present invention is defined by the terms of the claims, rather than the description above, and is intended to include any modifications within the meaning and scope equivalent to the terms of the claims.

## Claims

1. A solid state welding apparatus (1) comprising:
a pair of compression bars (11,12) that presses a first metal workpiece (W10) and a second metal workpiece (W20) on sides opposite in a direction of a thickness of the workpieces;
a pair of electrodes (21,22) disposed around the pair of compression bars (11,12), respectively; and
a controller (30),
the controller (30):
passing a first current (X1) through the pair of electrodes (21,22) while controlling the pair of compression bars (11,12) to cause a first load (F1) to act on each of the first and second workpieces (W10,W20) to bring the workpieces into contact with each other; and
subsequently passing a second current (X2) larger than the first current (X1) through the pair of electrodes (21,22) while controlling the pair of compression bars (11,12) to cause a second load (F2) to act on each of the first and second workpieces (W10,W20).

2. The solid state welding apparatus (1) according to claim 1, wherein the controller (30) passes the first current (X1) through the pair of electrodes (21,22) for a first period of time and thereafter temporarily stops passing the current, and subsequently passes the second current (X2) through the pair of electrodes (21,22) for a second period of time.

3. The solid state welding apparatus (1) according to claim 1, wherein the controller (30) passes the first current (X1) through the pair of electrodes (21,22) for a first period of time, immediately followed by passing the second current (X2) through the pair of electrodes (21,22) for a second period of time.

4. The solid state welding apparatus (1) according to any one of claims 1 to 3, further comprising a sensor (40) capable of sensing a load acting on the first and second workpieces (W10,W20) from the pair of compression bars (11,12), wherein
the controller (30) stops passing the first current (X1) through the pair of electrodes (21,22) in response to a value detected by the sensor (40) being a first threshold value, and stops passing the second current (X2) through the pair of electrodes (21,22) in response to a value detected by the sensor (40) being a second threshold value.

5. A solid state welding method using a solid state welding apparatus (1), the solid state welding apparatus (1) comprising:
a pair of compression bars (11,12) that presses a first metal workpiece (W10) and a second metal workpiece (W20) on sides opposite in a direction of a thickness of the workpieces;
a pair of electrodes (21,22) disposed around the pair of compression bars (11,12), respectively; and
a controller (30),
the solid state welding method comprising, by using the controller (30):
passing a first current (X1) through the pair of electrodes (21,22) while controlling the pair of compression bars (11,12) to cause a first load (F1) to act on each of the first and second workpieces (W10,W20) to bring the workpieces into contact with each other; and
subsequently passing a second current (X2) larger than the first current (X1) through the pair of electrodes (21,22) while controlling the pair of compression bars (11,12) to cause a second load (F2) to act on each of the first and second workpieces (W10,W20).
